# FASCICULE DE BREVET EUROPEEN

(11) **EP 3 806 702 B1**
(45) Date de publication et mention de la délivrance du brevet: **04.06.2025**
(21) Numéro de dépôt: 19730346.4
(22) Date de dépôt: 12.06.2019
(51) Int. Cl.: A47J 37/06

(54) **APPAREIL DE CUISSON DE TYPE FRITEUSE A AIR CHAUD AVEC SYSTEME D'OBTURATION DE L'EXTRACTION DE L'AIR CHAUD**
KOCHVORRICHTUNG VOM HEISSLUFTFRITTEUSENTYP MIT EINEM SYSTEM ZUM SCHLIESSEN DES HEISSLUFTEXTRAKTORS
COOKING APPARATUS OF THE HOT AIR DEEP FAT FRYER TYPE WITH A SYSTEM FOR CLOSING THE HOT AIR EXTRACTOR

(30) Priorité: 15.06.2018 FR 1855305
(43) Date de publication de la demande: 21.04.2021
(73) Titulaire: SEB S.A., 69130 Ecully (FR)
(72) Inventeur: CORNU, Jérémy, 69007 LYON (FR); PRIETO, Guillaume, 21380 MARSANNAY LE BOIS (FR); VOLATIER, Sébastien, 21000 DIJON (FR); SEURAT, Frédéric, 21490 BRETIGNY (FR)
(74) Mandataire: SEB Développement
(86) Numéro de dépôt international: PCT/EP2019/065418
(87) Numéro de publication internationale: WO 2019/238794

(56) Documents cités:
- WO-A1-2017/072068
- CN-U- 206 303 774
- US-A1- 2014 318 388

## Description

### Domaine technique

La présente invention concerne les appareils de cuisson, plus précisément les friteuses à air chaud permettant de réaliser une cuisson des aliments en utilisant très peu d'huile, voire pas du tout d'huile.

L'invention porte tout particulièrement sur de telles friteuses à air chaud qui comprennent un dispositif de circulation d'air comprenant des moyens d'aspiration d'air frais et des moyens d'extraction d'air chaud, lesdits moyens d'extraction étant équipés d'un système d'obturation de l'extraction de l'air chaud afin de modifier la cuisson des aliments.

### Etat de la technique

Les appareils de cuisson de type friteuse à air chaud sont connus de l'homme du métier. De tels appareils de cuisson permettent de réduire fortement la quantité de matière grasse, voire de la supprimer complètement, pendant la cuisson des aliments qui peuvent être d'origine végétale ou animale, par exemple des frites, des légumes, de la viande ou du poisson. En effet, la cuisson s'effectue avec peu ou pas d'huile grâce à de l'air chaud circulant dans une chambre de cuisson, ce qui permet de consommer des aliments plus diététiques.

Un tel appareil de cuisson comprend généralement une cuve qui reçoit un panier dans lequel sont disposés des aliments à cuire. Une fois les aliments disposés dans le panier et celui-ci positionné dans la cuve, l'appareil de cuisson peut être fermé pour former une chambre de cuisson incorporant la cuve, le panier et les aliments. De l'air chaud est ensuite pulsé dans cette chambre de cuisson au moyen d'un dispositif de chauffe et d'un dispositif de circulation d'air, la circulation de l'air chaud assurant ainsi la cuisson des aliments.

Le dispositif de circulation d'air comprend des moyens d'aspiration d'air frais configurés pour alimenter en air frais la chambre de cuisson et des moyens d'extraction d'air chaud configurés pour évacuer l'air chaud de la chambre de cuisson.

Il est connu des appareils de cuisson pour lesquels lesdits moyens d'extraction comprennent un système d'obturation configuré pour être activé soit en position ouverte autorisant l'évacuation de l'air chaud soit en position fermée limitant l'évacuation de l'air chaud, afin de créer une atmosphère confinée dans la chambre de cuisson. On citera notamment les modèles d'utilité CN204708660U, CN204813499U et les demandes de brevet CN106618249A et WO2017072068A1. Dans la position fermée du système d'obturation, la réalisation d'une cuisson avec une telle atmosphère confinée, chargée en vapeur d'eau, permet de cuire les aliments en évitant leur dessèchement afin de conserver tout leur moelleux. Inversement, dans la position ouverte du système d'obturation, la cuisson en atmosphère plus sèche permet de dorer les aliments afin de les rendre croustillants.

Le document US2014318388A1 divulgue un positionnement automatique d'un obturateur en fonction du mode de cuisson sélectionné et non durant un cycle de cuisson en fonction d'un paramètre de cuisson qui comprend le taux d'humidité, la température, le temps de cuisson ou encore la pression s'exerçant dans la chambre de cuisson.

Le document CN206303774U divulgue un volet motorisé pour gérer la température, l'humidité ou la pression à l'intérieur de l'enceinte de cuisson au cours d'un même cycle de cuisson.

### Résumé de l'invention

La présente invention concerne un appareil de cuisson présentant de tels moyens d'extraction muni d'un système d'obturation, l'objectif étant d'assurer une parfaite maîtrise de la cuisson des aliments à moindre coût.

A cette effet, l'invention concerne un appareil de cuisson de type friteuse à air chaud, comprenant une chambre de cuisson et un dispositif de circulation d'air comprenant :
- des moyens d'aspiration d'air frais configurés pour acheminer l'air frais vers un dispositif de chauffe de cet air, l'air ainsi chauffé alimentant ensuite la chambre de cuisson et,
- des moyens d'extraction d'air chaud configurés pour évacuer l'air chaud de la chambre de cuisson, les moyens d'extraction comprenant un système d'obturation configuré pour être activé soit en position ouverte autorisant l'évacuation de l'air chaud soit en position fermée limitant l'évacuation de l'air chaud de manière à créer une atmosphère confinée dans la chambre de cuisson,
caractérisé en ce que ledit appareil de cuisson comprend un dispositif de contrôle comportant des moyens pour gérer l'activation du système d'obturation en fonction d'au moins un paramètre de cuisson déterminé, durant un cycle de cuisson.. On entend par « paramètre de cuisson » une grandeur physique mesurable ayant une influence sur la cuisson des aliments, par exemple le taux d'humidité, la température, le temps de cuisson ou encore la pression s'exerçant dans la chambre de cuisson.

Ainsi, selon l'invention, l'au moins un paramètre de cuisson déterminé comprend le taux d'humidité, la température, le temps de cuisson ou encore la pression s'exerçant dans la chambre de cuisson.

On entend par « durant un cycle de cuisson » le fait que l'activation du système d'obturation peut se faire pendant la cuisson en tant que telle.

Ainsi, l'appareil de cuisson selon l'invention permet de gérer précisément la cuisson des aliments en atmosphère confinée ou non. En effet, l'appareil de cuisson permet de commencer à cuire les aliments en atmosphère confinée, en plaçant le système d'obturation en position fermée, afin que lesdits aliments conservent leur moelleux. Puis, lorsque le dispositif de contrôle détecte que l'au moins un paramètre de cuisson a atteint une valeur définie, le système d'obturation peut passer en position ouverte, la cuisson des aliments se poursuivant avec une atmosphère plus sèche, afin de dorer et rendre croustillants les aliments en surface, le coeur de ces aliments restant moelleux.

Selon l'appareil de cuisson objet de l'invention, le dispositif de contrôle comprend au moins un organe de mesure de l'au moins un paramètre de cuisson et une unité de commande configurée pour traiter des données restituées par l'organe de mesure et pour activer le système d'obturation en fonction desdites données.

On entend par « organe de mesure », un organe permettant la mesure d'un paramètre physique, mais également un organe permettant le comptage d'un paramètre temporel. Ainsi, selon une réalisation de l'appareil de cuisson, l'au moins un organe de mesure est choisi parmi un capteur d'humidité placé dans la chambre de cuisson, une unité de comptage du temps de cuisson, un capteur de température placé dans la chambre de cuisson et un capteur de pression placé dans la chambre de cuisson.

Selon une réalisation de l'appareil de cuisson, le dispositif de contrôle comprend un organe de sélection configuré pour spécifier le type d'aliments à cuire parmi plusieurs choix possibles et/ou le type de cuisson souhaité. En outre, l'unité de commande est configurée pour activer le système d'obturation en fonction des données restituées par l'organe de mesure et de la sélection réalisée. Ainsi, en fonction du type d'aliments sélectionné à cuire et/ou du type de cuisson souhaité, l'unité de commande ajuste la valeur de référence de l'au moins un paramètre de cuisson, ce qui finalement permet d'adapter au mieux le temps cuisson avec le système d'obturation en position fermée et celui avec le système d'obturation en position ouverte.

Selon l'appareil de cuisson objet de l'invention, les moyens d'extraction comprennent une bouche d'extraction et un mécanisme de fermeture de la bouche d'extraction, ledit mécanisme de fermeture étant configuré pour être actionné dans lesdites positions ouverte et fermée.

Selon une première réalisation de l'appareil de cuisson, le mécanisme de fermeture est configuré pour être actionné manuellement. En outre, le dispositif de contrôle comprend au moins un indicateur sonore ou visuel spécifiant à un utilisateur d'actionner le mécanisme de fermeture au moins dans la position ouverte, durant la cuisson. On peut aussi envisager que l'indicateur sonore ou visuel spécifie à l'utilisateur d'actionner le mécanisme de fermeture dans la position fermée. De préférence, le mécanisme de fermeture comprend un levier d'activation manuelle.

Selon une première conception de l'appareil de cuisson, le mécanisme de fermeture comprend une grille munie de passages, la grille étant agencée au niveau de la bouche d'extraction. En outre, le mécanisme de fermeture comprend une trappe mobile vis-à-vis de la grille, la trappe étant agencée pour être déplacée dans une position d'obturation des passages ou dans une position de dégagement des passages.

Selon une seconde conception de l'appareil de cuisson, le mécanisme de fermeture comprend une grille à volets mobiles. En outre, les volets sont agencés pour être déplacés dans une position d'ouverture de la grille ou dans une position de fermeture de la grille.

Selon une troisième conception de l'appareil de cuisson, le mécanisme de fermeture comprend au moins un passage et au moins un clapet. En outre, chaque clapet est agencé pour être plaqué contre le passage respectif afin de le fermer ou pour être dégagé dudit passage de manière à l'ouvrir.

### Brève description des figures

La description suivante met en évidence les caractéristiques et avantages de la présente invention. Cette description s'appuie sur des figures, parmi lesquelles :
- La figure 1 illustre une vue en coupe d'un appareil de cuisson de type friteuse à air chaud ;
- Les figures 2 et 3 illustrent en position ouverte et en position fermée un mécanisme de fermeture agencé au niveau d'une sortie d'extraction de l'air chaud sur l'appareil de cuisson ;
- Les figures 4 et 5 illustrent en position fermée et en position ouverte un mode de réalisation d'un mécanisme de fermeture sous la forme d'une grille à volets ;
- Les figures 6 et 7 illustrent en position ouverte et en position fermée un autre mode de réalisation d'un mécanisme de fermeture sous la forme d'une grille avec une trappe ;
- La figure 8 illustre sous forme schématique un dispositif de contrôle mis en œuvre sur l'appareil de cuisson.

### Description détaillée

Dans la suite de la description, l'appareil de cuisson est constitué d'un exemple de friteuse à air chaud, d'autres conceptions de friteuses à air chaud existant et pouvant également comporter les caractéristiques essentielles faisant l'objet de la présente invention qui vont être détaillées ci-après.

Dans la suite de la description, le terme friteuse sera utilisé pour dénommer l'appareil de cuisson 1, sauf indication.

Dans la suite de la description, les mêmes références sont utilisées pour désigner les mêmes caractéristiques ou leurs équivalents, selon les diverses variantes décrites.

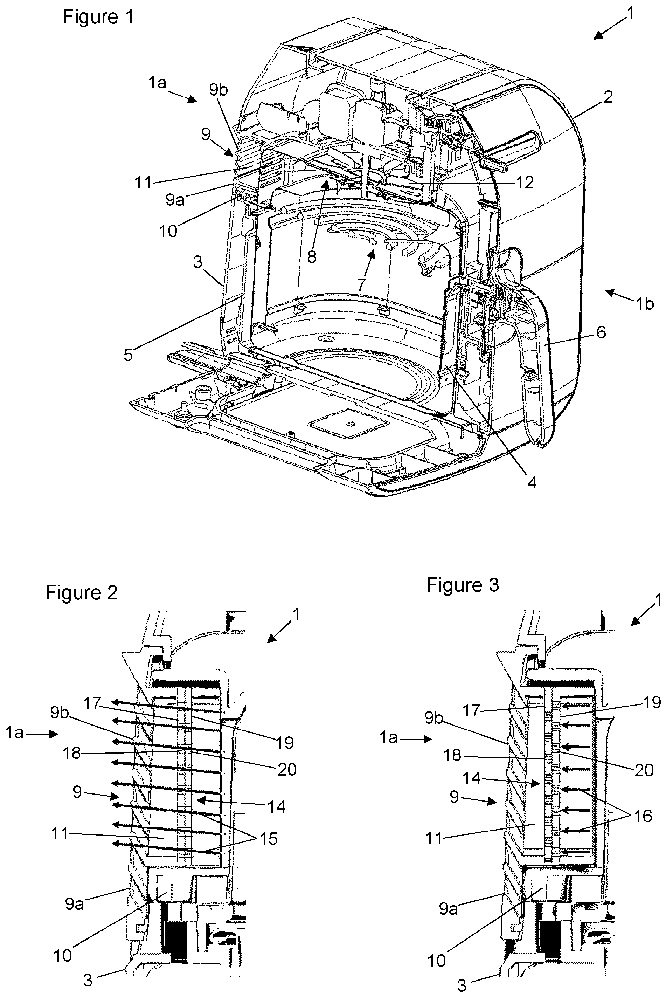

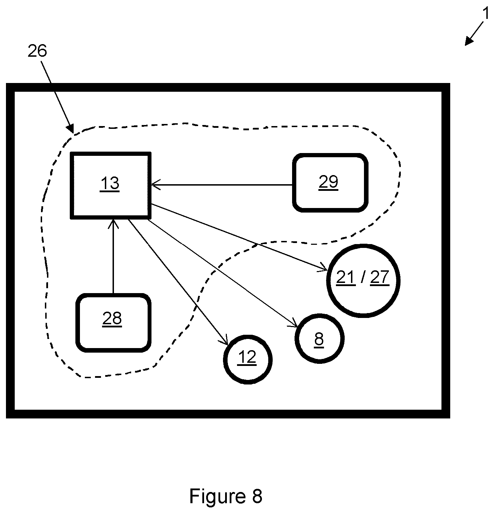

Comme illustré à la figure 1, la friteuse 1 comprend une coque 2 comportant une paroi 3 disposée en face arrière 1a de la friteuse 1, tandis que la face avant 1b de cette friteuse 1 permet l'insertion d'une cuve 4 à la manière d'un tiroir dans une chambre de cuisson 5 agencée à l'intérieur de la coque 2, ladite cuve 4 étant manipulée au moyen d'une poignée de manipulation 6. Sur la figure 1, un dispositif de chauffe 7 est agencé à l'intérieur de la coque 2, au-dessus de la chambre de cuisson 5. Comme illustré aux figures 1 à 3, un dispositif de circulation d'air 8 permet d'aspirer de l'air frais au travers d'une partie inférieure 9a d'une grille 9 qui est agencée sur la paroi 3, cet air frais pénètre par une bouche d'aspiration 10 puis est acheminé vers le dispositif de chauffe 7 afin d'être chauffé et, enfin, vers la chambre de cuisson 5. L'air chaud est ensuite refoulé à l'extérieur de la friteuse 1, par une bouche d'extraction 11 qui débouche en partie supérieure 9b de la grille 9. Le dispositif de circulation d'air 8 comprend un ventilateur 12 permettant d'acheminer l'air de la bouche d'aspiration 10 jusqu'à la bouche d'extraction 11. Les divers organes électriques de la friteuse 1, dont notamment le dispositif de chauffe 7 et le ventilateur 12, sont raccordés à un circuit d'alimentation électrique (non illustré) qui comporte notamment une unité de commande 13 (schématisée en figure 8) du type carte électronique. De telles caractéristiques sont connues sur les friteuses actuellement sur le marché, raison pour lesquelles elles ne seront pas détaillées ; l'homme du métier pourra par exemple se référer aux friteuses à air chaud développées par la demanderesse, par exemple celle commercialisée sous la dénomination FRY DELIGHT^{®}.

En regard des figures 2 et 3, un mécanisme de fermeture 14 est agencé au niveau de la bouche d'extraction 11, derrière la grille 9 agencée sur la paroi 3. Le mécanisme de fermeture 14 n'apparaît volontairement pas sur la figure 1, afin de mieux distinguer la grille 9 et la bouche d'extraction 11. Ce mécanisme de fermeture 14 peut être activé soit dans une position ouverte, illustrée en figure 2, soit dans une position fermée illustrée en figure 3. La position ouverte permet l'extraction de l'air chaud, comme le schématisent les flèches 15, tandis que la position fermée bloque l'extraction de l'air chaud, comme le schématisent les flèches 16.

Sur ces figures 2 et 3, le mécanisme de fermeture 14 comprend une grille 17 munie de passages 18 et une trappe 19 agencée derrière cette grille 17 et munie également de passages 20. La trappe 19 est mobile en translation pour faire coïncider les passages 20 de ladite trappe 19 avec les passages 18 de la grille 17, correspondant ainsi à ladite position ouverte, ou pour obturer les passages 18 de la grille au moyen de ladite trappe 19, correspondant ainsi à ladite position fermée. Dans cette configuration des figures 2 et 3, l'activation de la trappe 19 est réalisée au moyen d'un actionneur 21 (schématisé sur la figure 8) qui peut être électrique, électromagnétique, électromécanique ou autre, par exemple un mini-vérin électrique, un moteur ou un électroaimant avec un système mécanique du type came/biellette ou ressort. Cet actionneur 21 est commandé par l'unité de commande 13, schématisée en figure 8.

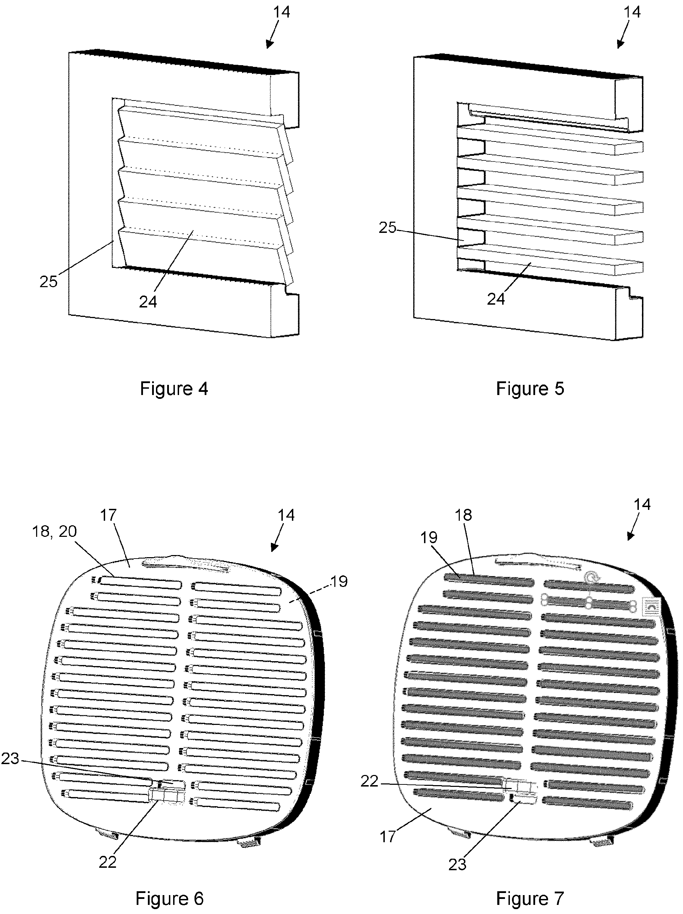

Les figures 6 et 7 illustrent une variante du mécanisme de fermeture 14 comprenant, comme précédemment, une grille 17 munie de passages 18 et une trappe 19 munie de passages 20. La trappe 19 est mobile en translation pour faire coïncider les passages 20 de ladite trappe 19 avec les passages 18 de la grille 17 (figure 6) ou pour obturer les passages 18 de la grille au moyen de ladite trappe 19 (figure 7). L'activation de la trappe 19 est réalisée au moyen d'un levier 22 assujetti à la trappe 19 et pouvant coulisser dans une lumière 23 sur la grille 17 pour atteindre les positions ouverte et fermée du mécanisme de fermeture 14. Selon cette configuration des figure 6 et 7, le mécanisme de fermeture 14 sera agencé en lieu et place de la grille 9, en limite de la bouche d'extraction 11, afin de pouvoir accéder au levier 22 par la face arrière 1a de la friteuse 1 et le manipuler avec une main.

D'autres variantes du mécanisme de fermeture 14 sont envisageables. Sur les figures 4 et 5, le mécanisme de fermeture 14 est à volets 24 qui peuvent pivoter d'une position de fermeture d'une fenêtre 25, tel qu'illustré en figure 4, bloquant le passage de l'air chaud, vers une position d'ouverture de la fenêtre 25, tel qu'illustré en figure 5, autorisant l'extraction de l'air chaud. L'activation des volets 24 peut être réalisée par un actionneur 21 commandé par l'unité de commande 13, cet actionneur 21 étant par exemple un mini-moteur électrique (non illustré) qui, par le biais d'un système de transmission (non illustré), entraîne le pivotement de tous les volets 24 de la position fermée vers la position ouverte, et inversement. Selon cette configuration, le mécanisme de fermeture 14 à volets 24 peut être agencé dans une position similaire à la figure 2. Au contraire, l'activation des volets 24 peut être réalisée manuellement, au moyen d'un levier (non illustré) entraînant le pivotement de ces volets 24 de la position ouverte vers la position fermée, et inversement. Selon cette configuration, le mécanisme de fermeture 14 sera agencé en lieu et place de la grille 9, en limite de la bouche d'extraction 11, afin de pouvoir accéder au levier par la face arrière 1a de la friteuse 1 et le manipuler.

On pourrait encore envisager un mécanisme de fermeture 14 équipé d'un clapet (non illustré) coulissant vers une position d'ouverture et vers une position de fermeture d'un passage sur la bouche d'extraction 11, l'activation du clapet se faisant manuellement par le biais d'un levier.

La friteuse 1 comprend également un dispositif de contrôle 26, schématisé en figure 8, qui permet de maîtriser l'ouverture du mécanisme de fermeture 14, selon les diverses variantes décrites précédemment à titre non limitatif. La maîtrise de l'extraction de l'air chaud, chargée en vapeur d'eau, permet d'ajuster la cuisson des aliments afin qu'ils soient plus ou moins moelleux et/ou plus ou moins croustillants.

Le dispositif de contrôle 26 est mis en œuvre au moyen de l'unité de commande 13 qui va permettre le déclenchement de l'activation du mécanisme de fermeture 14 lorsqu'un ou plusieurs paramètres de cuisson sont établis. Lorsque le mécanisme de fermeture 14 est à activation manuelle, au moyen d'un levier, l'unité de commande 13 active un indicateur 27 qui peut être une sonnerie ou un bip, voire un voyant lumineux, ledit indicateur 27 permettant de signaler à l'utilisateur d'activer le levier pour déplacer le mécanisme de fermeture 14 en position d'ouverture.

La friteuse 1 comprend un ou plusieurs organes de mesure 28 qui peuvent être un capteur de pression, un capteur d'humidité ou un capteur de température, lesquels sont placés dans la chambre de cuisson 5 pour mesurer respectivement la pression, le taux d'humidité ou la température dans la chambre de cuisson 5. Cet organe de mesure 28 peut aussi être une unité de comptage incorporée dans l'unité de commande 13 et permettant la mesure du temps de cuisson. L'unité de commande 13 traite les données transmises par le ou les organes de mesure 28 et agit en conséquence sur l'actionneur 21 ou sur l'indicateur 27, selon les cas, lorsque des seuils de valeurs de pression, de température, de taux d'humidité et/ou de temps sont atteints pour ces divers paramètres.

D'autres paramètres peuvent également être pris en compte par l'unité de commande 13, notamment le type d'aliments à cuire et/ou le type de cuisson souhaité par le consommateur. Pour cela, la friteuse 1 comprend un organe de sélection 29 qui peut être composé d'un ou plusieurs boutons de sélection ou d'un clavier à touches ou tactile, connecté à l'unité de commande 13. En fonction, du type d'aliments à cuire et du type de cuisson souhaité (plus ou moins moelleux au coeur et/ou plus ou moins croustillant en surface), l'unité de commande 13 traitera les données de la sélection retenue pour ajuster les seuils des paramètres de pression, d'humidité, de température et/ou de temps, selon ceux pris en considération par la friteuse 1.

La description qui précède n'est pas limitative, d'autres caractéristiques étant envisageables dans le cadre de l'invention. L'unité de commande 13 pourrait également agir sur l'actionneur 21 ou sur l'indicateur 27 pour l'activation du mécanisme de fermeture 14 dans la position fermée. L'unité de commande 13 pourrait également prévoir une ou plusieurs séquences d'activation de la fermeture et de l'ouverture du mécanisme de fermeture 14 durant un cycle de cuisson, selon le type d'aliments à cuire et/ou la cuisson souhaitée.

## Revendications

1. Appareil de cuisson (1) de type friteuse à air chaud, comprenant une chambre de cuisson (5) et un dispositif de circulation d'air (8) comprenant :
- des moyens d'aspiration d'air frais configurés pour acheminer l'air frais vers un dispositif de chauffe de cet air, l'air ainsi chauffé alimentant ensuite la chambre de cuisson et,
- des moyens d'extraction d'air chaud configurés pour évacuer l'air chaud de la chambre de cuisson, les moyens d'extraction comprenant un système d'obturation configuré pour être activé soit en position ouverte autorisant l'évacuation de l'air chaud soit en position fermée limitant l'évacuation de l'air chaud de manière à créer une atmosphère confinée dans la chambre de cuisson,
ledit appareil de cuisson comprenant un dispositif de contrôle (26) comportant des moyens pour gérer l'activation du système d'obturation en fonction d'au moins un paramètre de cuisson déterminé comprenant le taux d'humidité, la température, le temps de cuisson ou encore la pression s'exerçant dans la chambre de cuisson, durant un cycle de cuisson, les moyens d'extraction comprennent une bouche d'extraction (11) et un mécanisme de fermeture (14) de la bouche d'extraction, configuré pour être actionné dans lesdites positions ouverte et fermée, **caractérisé en ce que** le mécanisme de fermeture (14) est configuré pour être actionné manuellement, le dispositif de contrôle (26) comprenant au moins un indicateur (27) sonore ou visuel spécifiant à un utilisateur d'actionner le mécanisme de fermeture au moins dans la position ouverte, durant la cuisson.

2. Appareil de cuisson (1) selon la revendication 1, dans lequel le dispositif de contrôle (26) comprend au moins un organe de mesure (28) de l'au moins un paramètre et une unité de commande (13) configurée pour traiter des données restituées par l'organe de mesure et pour activer le système d'obturation en fonction desdites données.

3. Appareil de cuisson (1) selon la revendication 2, dans lequel l'au moins un organe de mesure (28) est choisi parmi un capteur d'humidité placé dans la chambre de cuisson, une unité de comptage du temps de cuisson, un capteur de température placé dans la chambre de cuisson et un capteur de pression placé dans la chambre de cuisson (5).

4. Appareil de cuisson (1) selon l'une quelconque des revendications 2 ou 3, dans lequel le dispositif de contrôle (26) comprend un organe de sélection (29) configuré pour spécifier le type d'aliments à cuire parmi plusieurs choix possibles et/ou le type de cuisson souhaité, l'unité de commande (13) étant configurée pour activer le système d'obturation en fonction des données restituées par l'organe de mesure (28) et de la sélection réalisée.

5. Appareil de cuisson (1) selon l'une des revendications 1 à 4, dans lequel le mécanisme de fermeture (14) comprend un levier (22) d'activation manuelle.

6. Appareil de cuisson (1) selon l'une quelconque des revendications 1 à 5, dans lequel le mécanisme de fermeture (14) comprend une grille (17) munie de passages (18), la grille étant agencée au niveau de la bouche d'extraction (11), et une trappe (19) mobile vis-à-vis de la grille (17), la trappe étant agencée pour être déplacée dans une position d'obturation des passages (18) ou dans une position de dégagement desdits passages.

7. Appareil de cuisson (1) selon l'une quelconque des revendications 1 à 6, dans lequel le mécanisme de fermeture (14) comprend une grille à volets (24) mobiles, lesdits volets étant agencés pour être déplacés dans une position d'ouverture de la grille ou dans une position de fermeture de la grille.

8. Appareil de cuisson (1) selon l'une quelconque des revendications 1 à 6, dans lequel le mécanisme de fermeture (14) comprend au moins un passage et au moins un clapet, chaque clapet étant agencé pour être plaqué contre le passage respectif afin de le fermer ou pour être dégagé dudit passage de manière à l'ouvrir.

## Patentansprüche

1. Gargerät (1) vom Typ Heißluftfritteuse, umfassend eine Garkammer (5) und eine Luftzirkulationsvorrichtung (8), umfassend:
- Frischluftansaugmittel, die dazu konfiguriert sind, die Frischluft zu einer Vorrichtung zum Erhitzen dieser Luft zu leiten, wobei die somit erhitzte Luft anschließend die Garkammer versorgt, und,
- Heißluftabzugsmittel, die dazu konfiguriert sind, Heißluft aus der Garkammer abzulassen, wobei die Abzugsmittel ein Verschlusssystem umfassen, das dazu konfiguriert ist, entweder in eine offene Position aktiviert zu werden, die das Ablassen von Heißluft zulässt, oder in eine geschlossene Position, die das Ablassen von Heißluft begrenzt, so dass eine in der Garkammer eingeschlossene Atmosphäre erzeugt wird,
wobei das Gargerät eine Steuervorrichtung (26) umfasst, die Mittel umfasst, um die Aktivierung des Verschlusssystems in Abhängigkeit von mindestens einem bestimmten Garparameter zu steuern, der den Feuchtigkeitsgehalt, die Temperatur, die Garzeit oder auch den Druck umfasst, der während eines Garzyklus in der Garkammer ausgeübt wird, wobei die Abzugsmittel eine Abzugsöffnung (11) und einen Mechanismus (14) zum Schließen der Abzugsöffnung umfassen, dazu konfiguriert, in der offenen und der geschlossenen Position betätigt zu werden, **dadurch gekennzeichnet, dass** der Schließmechanismus (14) dazu konfiguriert ist, manuell betätigt zu werden, wobei die Steuervorrichtung (26) mindestens einen akustischen oder visuellen Indikator (27) umfasst, der einen Benutzer anweist, den Schließmechanismus während des Garvorgangs mindestens in der offenen Position zu betätigen.

2. Gargerät (1) nach Anspruch 1, wobei die Steuervorrichtung (26) mindestens ein Messelement (28) für den mindestens einen Parameter und eine Steuereinheit (13) umfasst, die dazu konfiguriert ist, die von dem Messelement ausgegebenen Daten zu verarbeiten und das Verschlusssystem in Abhängigkeit von diesen Daten zu aktivieren.

3. Gargerät (1) nach Anspruch 2, wobei das mindestens eine Messelement (28) ausgewählt ist aus einem in der Garkammer angeordneten Feuchtigkeitssensor, einer Garzeit-Zähleinheit, einem in der Garkammer angeordneten Temperatursensor und einem in der Garkammer (5) angeordneten Drucksensor.

4. Gargerät (1) nach einem der Ansprüche 2 oder 3, wobei die Steuervorrichtung (26) ein Auswahlelement (29) umfasst, das dazu konfiguriert ist, die Art der zu garenden Lebensmittel unter mehreren möglichen Auswahlen und/oder die gewünschte Garart zu spezifizieren, wobei die Steuereinheit (13) dazu konfiguriert ist, das Verschlusssystem in Abhängigkeit von den durch das Messelement (28) ausgegebenen Daten und der ausgeführten Auswahl zu aktivieren.

5. Gargerät (1) nach einem der Ansprüche 1 bis 4, wobei der Schließmechanismus (14) einen Hebel (22) zur manuellen Aktivierung umfasst.

6. Gargerät (1) nach einem der Ansprüche 1 bis 5, wobei der Schließmechanismus (14) ein Gitter (17) umfasst, das mit Durchgängen (18) versehen ist, wobei das Gitter im Bereich der Abzugsöffnung (11) angeordnet ist, und eine Klappe (19), die gegenüber dem Gitter (17) beweglich ist, wobei die Klappe so angeordnet ist, dass sie in eine Verschlussposition der Durchgänge (18) oder in eine Freigabeposition der Durchgänge bewegt werden kann.

7. Gargerät (1) nach einem der Ansprüche 1 bis 6, wobei der Schließmechanismus (14) ein Gitter mit beweglichen Klappen (24) umfasst, wobei die Klappen angeordnet sind, um in eine Öffnungsposition des Gitters oder in eine Schließposition des Gitters bewegt zu werden.

8. Gargerät (1) nach einem der Ansprüche 1 bis 6, wobei der Schließmechanismus (14) mindestens einen Durchgang und mindestens eine Klappe umfasst, wobei jede Klappe angeordnet ist, um gegen den jeweiligen Durchgang gedrückt zu werden, um ihn zu schließen, oder um von dem Durchgang freigegeben zu werden, um ihn zu öffnen.

## Claims

1. Cooking apparatus (1) of the hot air fryer type, comprising a cooking chamber (5) and an air circulation device (8) comprising:
- fresh air suction means configured to convey the fresh air to a device for heating this air, the air thus heated subsequently supplying the cooking chamber, and
- hot air extraction means configured to discharge the hot air from the cooking chamber, the extraction means comprising a closure system configured to be activated either in the open position, allowing the discharge of the hot air, or in the closed position, limiting the discharge of the hot air, so as to create a confined atmosphere in the cooking chamber,
said cooking apparatus comprising a control device (26) comprising means for managing the activation of the closure system according to at least one predetermined cooking parameter comprising humidity level, temperature, cooking time, or pressure exerted in the cooking chamber, during a cooking cycle, the extraction means comprising an extraction outlet (11) and a closure mechanism (14) of the extraction outlet, configured to be operated in said open and closed positions, **characterised in that** the closure mechanism (14) is configured to be operated manually, the control device (26) comprising at least one audible or visual indicator (27) instructing a user to operate the closure mechanism at least in the open position during cooking.

2. Cooking apparatus (1) according to claim 1, wherein the control device (26) comprises at least one measuring element (28) for measuring the at least one parameter and a control unit (13) configured to process data returned by the measuring element and to activate the closure system based on said data.

3. Cooking apparatus (1) according to claim 2, wherein the at least one measuring element (28) is selected from a humidity sensor placed in the cooking chamber, a cooking time counter unit, a temperature sensor placed in the cooking chamber, and a pressure sensor placed in the cooking chamber (5).

4. Cooking apparatus (1) according to any one of claims 2 or 3, wherein the control device (26) comprises a selection element (29) configured to specify the type of food to be cooked from among several possible choices and/or the desired type of cooking, the control unit (13) being configured to activate the closure system based on the data returned by the measuring element (28) and the selection made.

5. Cooking apparatus (1) according to any one of claims 1 to 4, wherein the closure mechanism (14) comprises a lever (22) for manual activation.

6. Cooking apparatus (1) according to any one of claims 1 to 5, wherein the closure mechanism (14) comprises a grill (17) provided with passages (18), the grill being arranged at the extraction outlet (11), and a hatch (19) that is movable with respect to the grill (17), the hatch being designed to be moved into a position in which it closes off the passages (18) or into a position in which it releases said passages.

7. Cooking apparatus (1) according to any one of claims 1 to 6, wherein the closure mechanism (14) comprises a grill (24) with movable slats, said slats being designed to be moved into a position in which the grill is open or into a position in which the grill is closed.

8. Cooking apparatus (1) according to any one of claims 1 to 6, wherein the closure mechanism (14) comprises at least one passage and at least one flap, each flap being designed to be pressed against the respective passage in order to close it or to be released from said passage in order to open it.
